# EUROPÄISCHE PATENTANMELDUNG

(11) **EP 0 840 470 A2**
(43) Veröffentlichungstag der Anmeldung: **06.05.1998**
(21) Anmeldenummer: 97440092.1
(22) Anmeldetag: 03.10.1997
(51) Int. Cl.: H04B 10/24

(54) **Optische Netzabschlusseinheit eines hybriden Glasfaser-Koaxialkabel-Zugangsnetzes**

(30) Priorität: 31.10.1996 DE 19643872
(71) Anmelder: ALCATEL ALSTHOM COMPAGNIE GENERALE D'ELECTRICITE, 75008 Paris (FR)
(72) Erfinder: Krimmel, Heinz, 70825 Korntal-Münchingen (DE)
(74) Vertreter: Schätzle, Albin, Dipl.-Phys.

(57) **Zusammenfassung**

In einem hybriden Glasfaser-Koaxialkabel-Zugangsnetz NET mit Vorwärtskanal und Rückkanal dient der Rückkanal zur Übertragung von Sprach- und Videosignalen sowie Datensignalen von Gruppen von Endstellen ( NT1; NT2 ) zu einer Unterzentrale ( HUB ). Der Zugriff einer Gruppe von Endstellen ( NT1; NT2 ) auf eine gemeinsame elektrische Leitung (KOAX1; KOAX2 ) erfolgt beispielsweise über TDMA, FDMA oder CDMA. Eine optische Netzabschlußeinheit ( ONU ) ist mit einer oder mehreren elektrischen Leitungen ( KOAX1; KOAX2 ) verbunden. Für jede Leitung oder für jeden separaten Frequenzbereich des Rückkanals beinhaltet die optische Netzabschlußeinheit ( ONU ) einen Analog/Digital Umsetzer (A/D1, A/D2 ), in dem das empfangene Signal digitalisiert wird. Bei mehreren Analog/Digital Umsetzern (A/D1, A/D2 ) werden die einzelnen digitalisierten Signale in einem Multiplexer ( MUX ) gemultiplext und anschließend einem digitalen Elektrisch/Optisch Umsetzer ( E/02 ) zugeführt. Im Elektrisch/Optisch Umsetzer ( E/02 ) werden die gemultiplexten Signale in optische Signale umgesetzt und anschließend über eine optische Leitung ( FIBRE ) zur Unterzentrale ( HUB ) übertragen, in der sie digital weiterverarbeitet werden.

## Beschreibung

Die Erfindung betrifft eine optische Netzabschlußeinheit eines hybriden Glasfaser-Koaxialkabel-Zugangsnetzes gemäß Patentanspruch 1 und ein Verfahren zum Übertragen von elektrischen Signalen gemäß Patentanspruch 5.

Ein hybrides Glasfaser-Koaxialkabel-Zugangsnetz ist beispielsweise ein Kabelfernsehverteilnetz mit einem Vorwärtskanal und einem Rückkanal, über das verschiedene bidirektionale Dienste, wie beispielsweise Telefonie, Datenaustausch via Internet oder Bildtelefonie möglich sind. Aus DE 4436818 ist ein Teilnehmeranschlußnetz zur Übertragung von Digitalsignalen bidirektionaler interaktiver Telekommunikationsdienste bekannt. Die Lichtwellenleiter eines Lichtwellenleiternetzes sind dazu jeweils hinter dem teilnehmernächsten Koaxialleitungsverstärker eines CATV-Koaxialleitungsbaumnetz mit den Zweigen des Baumnetzes bidirektional verbunden. Die Übertragung auf den Lichtwellenleitern erfolgt digital, beispielsweise im ATM-Format. Dazu ist eine Demodulation und/oder eine Frequenzumsetzung der elektrischen Teilnehmersignale erforderlich.

Es ist deshalb eine Aufgabe der Erfindung elektrische Signale mehrerer Endstellen eines hybriden Glasfaser-Koaxialkabel-Zugangsnetzes technisch weniger aufwendig über größere Strecken, z.B. 50 km, zu übertragen.

Diese Aufgabe wird durch die Lehre der unabhängigen Patentansprüche 1 und 5 gelöst. Vorteilhafte Ausgestaltungen sind den abhängigen Patentansprüchen 2 bis 4 zu entnehmen.

Ein besonderer Vorteil der Erfindung ist, daß ein geringerer schaltungstechnischer Aufwand in den optischen Netzabschlußeinheiten zur Umsetzung der elektrischen Signale in optische Signale erforderlich ist.

Ein weiterer Vorteil der Erfindung ist die Flexibilität des Einsatzes der optischen Netzabschlußeinheiten aufgrund der Umsetzung der elektrischen Signale ohne vorherige Demodulation und der dadurch bedingten Anwendbarkeit für beliebig modulierte Signale.

Im folgenden wird die Erfindung anhand eines Ausführungsbeispiels unter Zuhilfenahme einer Figur erläutert.

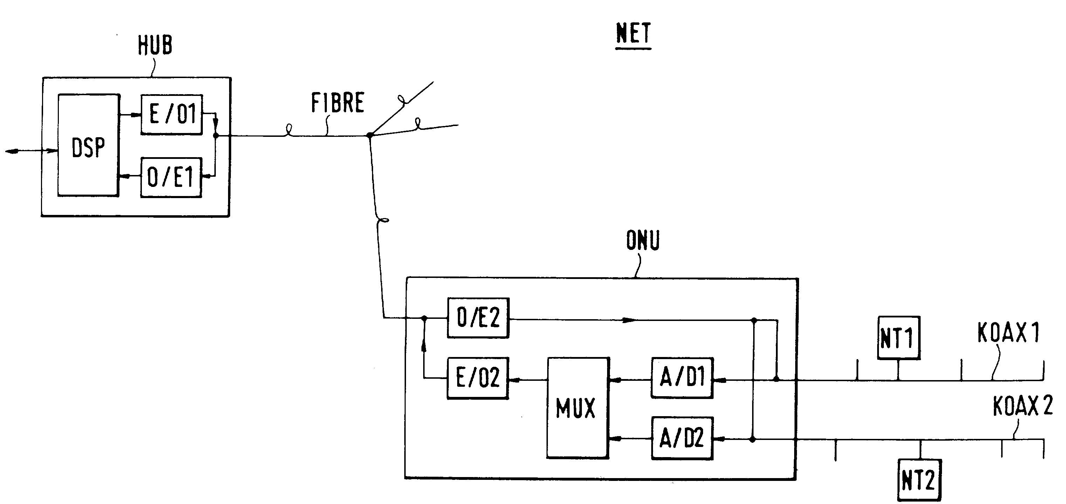

Die Figur zeigt eine schematische Darstellung eines erfindungsgemäßen - hybriden Glasfaser-Koaxialkabel-Zugangsnetzes mit einen Vorwärtskanal und einem Rückkanal.

Das hybride Glasfaser-Koaxialkabel-Zugangsnetz NET dient beispielsweise der Übertragung von analogen und digitalen Fernseh- und Videosignalen sowie Datensignalen von einer Unterzentrale HUB zu mehreren Endstellen NT1, NT2 sowie der Übertragung von analogen und digitalen Sprach- und Videosignalen sowie Datensignalen von mehreren Endstellen NT1, NT2 zur Unterzentrale HUB. Die zu übertragenden Signale werden in der Unterzentrale HUB elektrisch/optisch E/O1 umgesetzt und über ein Verteilnetz aus optischen Leitungen, z.B.Glasfaserleitungen FIBRE, und optischen Splittern über den Vorwärtskanal zu mehreren optischen Netzabschlußeinheiten ONU, wovon eine dargestellt ist, übertragen. In jeder optischen Netzabschlußeinheit ONU findet eine optisch/elektrische Umsetzung der empfangenen Signale statt, die anschließend elektrisch über Koaxialkabel KOAX1, KOAX2 zu mehreren Endstellen NT1, NT2 übertragen werden. Von den Endstellen NT1, NT2 sind beispielhaft zwei dargestellt. Die Videosignale sind beispielsweise von Teilnehmern interaktiv ausgewählte Spielfilme, Lernprogramme oder dergleichen. Die Auswahl der Videosignale sowie die Übertragung der Datensignale, z.B. für einen Internetzugang, erfolgt über den Rückkanal, dessen Frequenzbereich beispielsweise zwischen 5 MHz und 30 MHz liegt.

Gruppen von Endstellen NT1; NT2 haben jeweils über eine der jeweiligen Gruppe zugeordnete elektrische Leitung, ein Koaxialkabel KOAX1; KOAX2, Zugriff auf den Frequenzbereich des Rückkanals. Der Zugriff erfolgt beispielsweise im TDMA, FDMA oder CDMA Verfahren; TDMA = Time Division Multiple Access, FDMA = Frequency Division Multiple Access, CDMA = Carrier Division Multiple Access. Bei allen Verfahren wird eine elektrische Leitung gemeinsam von mehreren Teilnehmern genutzt. Es wird Unterträgermodulation verwendet, so daß das an der optischen Netzabschlußeinheit ONU empfangene Signal ein quasi-analoges Signal ist.

Jede optische Netzabschlußeinheit ONU hat einen Analog/Digital Umsetzer A/D1, der eingangsseitig mit einer elektrischen Leitung, dem Koaxialkabel KOAX1 vebunden ist. Das von mehreren Endstellen NT1 über das Koaxialkabel KOAX1 empfangene quasi-analoge Signal wird im Analog/Digital Umsetzer A/D1 digitalisiert. Die Digitalisierung erfolgt beispielsweise mit 80 MHz und einer Auflösung von 10 Bit. Jedem Analog/Digital Umsetzer A/D1 kann ein Bandpaßfilter oder ein Tiefpaßfilter vorgeschaltet sein, z.B. zur Bildung von Teilfrequenzbändern bzw. zur Störungsunterdrückung. Die Digitalisierung wird ohne vorherige Demodulation und ohne Frequenzumsetzung durchgeführt. Das empfangene quasi-analoge Signal wird also unverändert, bis auf eine mögliche Filterung dem Analog/Digital Umsetzer A/D1 zugeführt.

Ein Vorteil der Digitalisierung ist, daß das digitalisierte quasi-analoge Signal mittels einer digitalen Leitungsausrüstung, die einen digitalen Elektrisch/Optisch Umsetzer beinhaltet, weiterübertragen werden kann, wodurch die beim FDMA-Verfahren erforderliche aufwendige Unterträgersignalübertragung über optische Leitungen entfällt. Bei der Übertragung des digitalisierten Signals können alle bekannten digitalen Transportverfahren unabhängig von der Modulationart verwendet werden. Des weiteren ist eine Verarbeitung des digitalisierten Signals in der Unterzentrale HUB mittels eines digitalen Signalprozessors einfacher und kostengünstiger, da die Verarbeitung digital erfolgen kann, im Gegensatz zu einer analogen Verarbeitung beim FDMA-Verfahren.

Ein Nachteil der Digitalisierung ist, daß im Vergleich zur Übertragung über das Koaxialkabel KOAX1 eine erhöhte Übertragungsbandbreite erforderlich ist, die allerdings auf der optischen Leitung FIBRE verfügbar ist. Das erforderliche Signal-zu-Rausch Verhältnis ist aber aufgrund der Digitalisierung deutlich verringert. Die Kapazität der optischen Leitung FIBRE wird also durch die Übertragung des digitalisierten Signals besser ausgenutzt.

Jede optische Netzabschlußeinheit ONU beinhaltet einen digitalen Elektrisch/Optisch Umsetzer E/O2 zur Umsetzung des digitalisierten Signals in ein optisches Signal. Der Elektrisch/Optisch Umsetzer E/O2 ist beispielsweise eine direkt modulierte Laserdiode. Das optische Signal wird über die optische Leitung FIBRE zur Unterzentrale HUB übertragen. Die optischen Netzabschlußeinheiten arbeiten dazu beispielsweise im Wellenlängenmultiplex mit jeweils unterschiedlichen Wellenlängen. Eine optische Netzabschlußeinheit hat beispielsweise eine Laserdiode, die Licht der Wellenlänge 1520nm emittiert, eine andere eine Laserdiode, die Licht der Wellenlänge 1550nm emittiert. In der Unterzentrale HUB befindet sich ein Optisch/Elektrisch Umsetzer O/E1 zur Rückumsetzung des empfangenen optischen Signals in ein elektrisches und ein digitaler Signalprozessor DSP zur Demodulation des elektrischen Signals sowie beispielsweise zur Protokollanpassung an ein diensteintegrierendes digitales Netz. Eine konventionelle, analoge Demodulation nach einer Digital/Analog Umsezung ist ebenfalls möglich.

Jede optische Netzabschlußeinheit ONU kann neben dem Analog/Digital Umsetzer A/D1 einen weiteren Analog/Digital Umsetzer A/D2 und einen Multiplexer MUX beinhalten. Der Analog/Digital Umsetzer A/D2 ist mit einer von der elektrischen Leitung KOAX1 separierten Leitung, dem Koaxialkabel KOAX2 verbunden. Das Koaxialkabel KOAX2 ist mit einer Gruppe von Endstellen NT2 verbunden, die gemeinsam Zugriff auf das Koaxialkabel KOAX2 haben. Der Zugriff erfolgt beispielsweise nach TDMA, FDMA oder CDMA.

Der Analog/Digital Umsetzer A/D2 digitalisiert das empfangene quasi-analoge Signal der Endstellen NT2 und leitet das digitalisierte Signal zum Multiplexer weiter. Im Multiplexer MUX wird das digitalisierte Signal des Analog/Digital Umsetzers A/D1 mit dem digitalisierten Signal des Analog/Digital Umsetzers A/D2 gemultiplext. Der Multiplexer MUX faßt die beiden digitalisierten Signale beispielsweise zu einen Signal doppelter Bitrate zusammen oder arbeitet beispielsweise als Zeitmultiplexer. Das Ausgangssignal des Multiplexers MUX wird dem digitalen Elektrisch/Optisch Umsetzer E/O2 zugeführt, in dem es in ein optisches Signal umgesetzt wird, das optisch zur Unterzentrale HUB übertragen wird.

Die optische Netzabschlußeinheit ONU kann auch drei oder mehr Analog/Digital Umsetzer beinhalten. Die Anzahl der Analog/Digital Umsetzer wird begrenzt durch das Verhältnis der Übertragungskapazität auf der optischen Leitung FIBRE zu der Summe der Übertragungskapazitäten auf den elektrischen Leitungen und der Auflösung der Analog/Digital Umsetzer. Das Maximum ist erreicht, wenn die Summe der Übertragungskapazitäten der digitalisierten Signale gleich der Übertragungskapazität der optischen Leitung FIBRE ist. Die verfügbare Übertragungskapazität auf der optischen Leitung FIBRE kann somit optimal ausgenutzt werden.

Im Ausführungsbeispiel ist jede separate elektrische Leitung mit einem Analog/Digital Umsetzer verbunden. Alternativ können auch mehrere elektrische Leitungen mit nur einem Analog/Digital Umsetzer verbunden sein oder es kann eine Leitung mit mehreren Analog/Digital Umsetzern verbunden sein. Die Wahl der Zuordnung von elektrischen Leitungen zu Analog/Digital Umsetzern ist abhängig von der Leistungsfähigkeit der Analog/Digital Umsetzer. Ist ein Analog/Digital Umsetzer nur für eine Bandbreite ausgelegt, die kleiner ist als der Frequenzbereich des Rückkanals, so ist es zweckmäßig den Rückkanal, z.B. mittels Bandpässen mit unterschiedlichen Durchlaßbereichen in separate Frequenzbereiche aufzuteilen und jedem Frequenzbereich einem Analog/Digital Umsetzer zuzuordnen. Des weiteren könnten gleiche Fequenzbereiche verschiedener elektrischer Leitungen einem Analog/Digital Umsetzer zugeordnet werden.

## Patentansprüche

1. Optische Netzabschlußeinheit ( ONU ) eines hybriden Glasfaser-Koaxialkabel-Zugangsnetzes ( NET ) mit einem Vorwärtskanal und einem Rückkanal,
- die zum Empfang und zur elektrischen Weiterleitung von optischen Signalen im Vorwärtskanal sowie zum Empfang und zur digitalen optischen Weiterleitung von quasi-analogen elektrischen Signalen im Rückkanal dient,
- die dazu einen Optisch/Elektrisch Umsetzer ( O/E2 ), einen digitalen Elektrisch/Optisch Umsetzer ( E/O2 ) sowie einen Analog/Digital Umsetzer ( A/D1 ) beinhaltet,
- in der die empfangenen elektrischen Signale im Analog/Digital Umsetzer ( A/D1 ) digitalisiert werden und
- in der die digitalisierten Signale im digitalen Elektrisch/Optisch Umsetzer ( E/O2 ) in digitale optische Signale umgesetzt werden.

2. Optische Netzabschlußeinheit ( ONU ) nach Anspruch 1, dadurch gekennzeichnet, daß die Digitalisierung der empfangenen elektrischen Signale ohne vorherige Demodulation erfolgt.

3. Optische Netzabschlußeinheit ( ONU ) nach Anspruch 1, dadurch gekennzeichnet, daß die optische Netzabschlußeinheit ( ONU ) wenigstens einen weiteren Analog/Digital Umsetzer ( A/D2 ) und einen Multiplexer ( MUX ) beinhaltet, jeder weitere Analog/Digital Umsetzer ( A/D2 ) zur Digitalisierung von von einer separaten elektrischen Leitung ( KOAX2 ) empfangenen elektrischen Signalen oder zur Digitalisierung der empfangenen Signale in einem separaten Frequenzbereich des Rückkanals dient, die unterschiedlichen digitalisierten Signale der Analog/Digital Umsetzer ( A/D1, A/D2 ) im Multiplexer ( MUX ) gemultiplext und anschließend dem digitalen Elektrisch/Optisch Umsetzer ( E/O2 ) zugeführt werden.

4. Optische Netzabschlußeinheit ( ONU ) nach Anspruch 1, dadurch gekennzeichnet, daß dem Analog/Digital Umsetzer ( A/D1 ) ein Bandpaßfilter oder ein Tiefpaßfilter vorgeschaltet ist.

5. Verfahren zum Übertragen von elektrischen Signalen von mehreren Endstellen ( NT1, NT2 ) eines hybriden Glasfaser-Koaxialkabel-Zugangsnetzes ( NET ) über eine elektrische Leitung und eine optische Leitung,
- bei dem die elektrischen Signale der mehreren Endstellen gemeinsam über eine elektrische Leitung zu einer optischen Netzabschlußeinheit ( ONU ) übertragen werden und
- bei dem die in der optischen Netzabschlußeinheit ( ONU ) empfangenen Signale digitalisiert und anschließend mittels eines digitalen Elektrisch/Optisch Umsetzers ( E/O ) in optische Signale umgesetzt werden.
